# NEUE EUROPÄISCHE PATENTSCHRIFT

(11) **EP 0 956 920 B2**
(45) Veröffentlichungstag und Bekanntmachung des Hinweises auf die Entscheidung über den Einspruch: **06.12.2006**
(45) Hinweis auf die Patenterteilung: 14.05.2003
(21) Anmeldenummer: 98124495.7
(22) Anmeldetag: 28.12.1998
(51) Int. Cl.: B23B 31/107, B23Q 11/10

(54) **Futter für drehantreibbare Werkzeuge, insbesondere Bohrer, Gewindebohrer o.dgl.**
Chuck for rotary tools, specially drills, taps and others
Mandrin pour outils rotatifs, spécialement forets, tarauds et autres

(30) Priorität: 13.05.1998 DE 19821270
(43) Veröffentlichungstag der Anmeldung: 17.11.1999
(73) Patentinhaber: Bilz Werkzeugfabrik GmbH & Co. KG, 73760 Ostfildern (DE)
(72) Erfinder: Bäder, Siegfried, 73257 Köngen (DE)
(74) Vertreter: Kratzsch, Volkhard

(56) Entgegenhaltungen:
- EP-A- 0 170 604
- WO-A-94/07646
- DE-A- 4 019 427
- DE-A- 4 322 552
- DE-A- 4 326 023
- DE-A- 19 654 010
- FR-U- 2 239 849
- GB-A- 2 266 676
- US-A- 4 453 775
- US-A- 5 573 255

## Beschreibung

Die Erfindung bezieht sich auf ein Futter für drehantreibbare Werkzeuge, insbesondere Bohrer, Gewindebohrer od.dgl. der im Oberbegriff des Anspruchs 1 genannten Art.

Bei einem bekannten Futter dieser Art (DE 40 19 427 C2) wird das Kühl- und/oder Schmiermittel durch einen zentralen Hauptkanal der Futterhülse hindurchgeführt und in einen dazu koaxialen und axial anschließenden inneren Axialkanal im Schaft des Werkzeuges eingeleitet, durch den das Schmiermittel über eine wesentliche Schaftlänge im Inneren hindurchgeführt wird. An diesen inneren Kanal im Werkzeugschaft schließen sich mehrere radial gerichtete Bohrungen an, die in eine umfangsseitige eingetiefte Verteilernut des Werkzeugschaftes münden. Der Werkzeugschaft weist ferner auf seiner Außenseite einzelne längsdurchgehende Nuten auf, die von der Verteilernut ausgehen und bis zu den Schneiden des Werkzeuges, z.B. zu einem Gewindekopf eines Gewindebohrers als Werkzeug, reichen. Das Schmiermittel wird somit zunächst durch das Innere des Werkzeugschaftes in einem axialen Strom geführt und dann im wesentlichen rechtwinklig umgelenkt in die radialen Bohrungen im Werkzeugschaft. Von dort gelangt das Schmiermittel in die umfangsseitige Verteilernut im Werkzeugschaft und von dieser über die axial vertaufenden Nuten im Werkzeugschaft nach vorn zu den Schneiden des Werkzeuges. Der Schaft des Werkzeuges ist etwa in dem Bereich, wo sich die umlaufende Verteilernut befindet, und auf einem kurzen, daran angrenzenden Längenabschnittvon der Hülse umfaßt, die in die zentrale innere Aufnahme der Futterhülse lösbar einsetzbar ist. Die axiale Hülsenlänge ist insbesondere im Verhältnis zur Axiallänge des Werkzeuges sehr kurz. Dies hat nicht nur den Nachteil, daß wegen relativ kurzer Führungslänge eine mitunter nicht ausreichende Führung des eingesteckten Werkzeuges zu verzeichnen ist, sondern ist vor allem deswegen nachteilig, weil das in Längsrichtung des Werkzeuges außenseitig geleitete Kühlund/oder Schmiermittel, sobald es das Ende der Hülse erreicht hat, leicht verwirbelt, ohne daß das Schmiermittel in Längsrichtung des Werkzeuges weitergeleitet wird. Von Nachteil ist hinsichtlich der Führung des Kühl- und/oder Schmiermittels ferner auch dessen zunächst notwendige Führung zentral durch den Werkzeugschaft und anschließende Umlenkung um etwa 90° in die radialen Verteilerbohrungen und dann erneute Umlenkung etwa um 90° von der umlaufenden Verteilernut in die einzelnen längsverläufenden Nuten auf der Außenseite des Werkzeugschaftes. Die dadurch notwendige vielfache Umleitung des Kühl- und/oder Schmiermittels und die Gefahr einer Verwirbelung am Austritt der Hülse führt dazu, daß eine unzulängliche Schmierung im Bereich der Werkzeugschneiden die Folge ist. Dies macht sich vor allem bei der heutzutage angestrebten Mindermengenschmierung sehr nachteilig bemerkbar, bei der den Schneiden des Werkzeuges, z.B. einem Gewindekopf eines Gewindebohrers, beispielsweise etwa 0,5 bis 5 ml pro Stunde an Kühl-/ Schmiermittel zugeführt wird. Um derartige geringe Flüssigkeitsdurchsätze zu erzielen, wird mit einem geringen Überdruck etwa in der Größenordnung von 3 bis 5 bar gearbeitet und ein Nebel gebildet, der mit Kühl-/ Schmiermittelpartikeln angereichert ist. Durch mehrfache im Strömungsverlauf vorhandene Umlenkungen und sich dadurch ergebende Abkantungen kann dieser Nebel an den Umlenkungen kondensieren, wodurch dann eineTröpfchenbildung erfolgen kann. Dies bedeutet, daß es zu einer ungleichmäßigen Schmierung kommen kann, bei der sich plötzlich im Bereich der Umlenkungen von einer Abkantung ein Tropfen lösen kann und längs der Außenseite des Werkzeuges weitergeleitet wird, während in der dazwischenliegenden Zeit überhaupt kein Kühl-/Schmiermittel längs des Werkzeuges geführt wird. Nachteilig ist femer, daß bei dieser bekannten Gestaltung das Werkzeug besonders an diese Art der Schmiermittelführung angepaßt sein muß. Das Werkzeug muß dazu am einen Ende einen zentralen inneren Schmiermittelkanal enthalten und ferner die dazu radial gerichteten Bohrungen sowie die umfangsseitig eingearbeitete Verteilernut und ferner die auf der Außenseite des Werkzeuges längsverlaufenden, eingetieften Nuten. Diese einzelnen Bohrungen und Nuten schwächen den Querschnitt des Werkzeuges, so daß derartige werkzeugseitige Maßnahmen allenfalls bei recht großen Werkzeugen ohne größere nachteilige Auswirkungen auf die Festigkeit des Werkzeuges zur Anwendung kommen können. Bei kleineren Werkzeugen mit geringeren Querschnitten sind derartige Bohrungen und Kanäle im bzw. am Werkzeug in hohem Maße schwächend und daher aus Festigkeitsgründen von großem Nachteil. Abgesehen davon sind derartige Bearbeitungen des Werkzeuges, um dieses zu einer entsprechenden Führung des Kühl- und/oder Schmiermittels herzurichten, kostenaufwendig und teuer.
Bei einem bekannten Futter genannter Art (WO 94/07646) weist die Hülse eine über ihre ganze Länge verlaufende innere Axialbohrung auf, auf deren Innenseite durchlaufende Längskanäle für die Durchleitung des Kühl- und/oder Schmiermittels gebildet sind. Der Übergangsbereich zwischen dem zentralen Hauptkanal in der Futterhülse und dem Ende der Hülse, das der Futterhülse zugewandt ist, enthält einen abrupten Durchmessersprung. Eine solche sprunghafte Durchmesserveränderung ist nachteilig für den durchlaufenden Strom des Kühl- und/oder Schmiermittels insbesondere dann, wenn es sich hierbei um ein mit nur geringem Druck zugeführtes Aerosol handelt. Von Nachteil ist ferner, dass die aufzunehmenden Werkzeuge mit ihrem in der Axialbohrung der Hülse aufzunehmenden Schaft kürzer bemessen sein müssen als die axiale Länge der Axialbohrung und somit diese Axialbohrung nicht über deren ganze Länge durchsetzen können; denn werden die Werkzeuge bis zur vollen axialen Länge der Axialbohrung in der Hülse eingesteckt, liegen sie mit ihrer planen Stirnfläche an einer Schulter im Übergangsbereich zwischen dem Hauptkanal in der Futterhülse und dem Hülsenende an und versperren mit dieser Stirnfläche den Auslass des zentralen Hauptkanals, so dass von diesem kein Kühl- und/oder Schmiermittel in die Hülse gelangen kann.
Bekannt ist ferner ein Futter für Werkzeuge (GB 22 66 676 A), das eine Futterhülse aufweist, die mit einem Halteschaft in einer Bohrung eines Kopfes einer Werkzeugmaschine aufnehmbar und darin mittels Klemmschrauben festklemmbar ist. Die Futterhülse weist ein Vorderteil auf, das über den Kopf der Werkzeugmaschine axial übersteht. Im Halteschaft ist ein zentraler axialer Kanal für eine Kühlflüssigkeit enthalten, der im Halteschaft mit einem axialen Ende in einer etwa kegelstumpfförmigen Einsenkung endet und am anderen Ende der Futterhülse offen ist und dort mit dem Ende eines im Werkzeugmaschinenkopf befindlichen Zufuhrkanals für die Kühlflüssigkeit in Verbindung steht. Im Vorderteil der Futterhülse ist eine Axialbohrung zur passenden Aufnahme eines Werkzeugschaftes enthalten, die bis in den Halteschaft und zur dortigen kegelstumpfförmigen Einsenkung reicht. Auf ihrer Innenseite enthält diese Axialbohrung zumindest eine axial verlaufende Nut, die zur freien Stirnseite des Vorderteils hin offen ist und mit dem anderen Ende in die Einsenkung mündet. Durch die mindestens eine Nut in der Futterhülse wird unter Druck Kühlflüssigkeit von dem zentralen axialen Kanal über die Einsenkung bis zur freien Stirnseite des Vorderteils geführt, wo die Kühlflüssigkeit in Form eines zum Axialverlauf des eingesteckten Werkzeuges im Wesentlichen parallelen Hochdruckstrahles austritt und bis zur Werkzeugspitze und zum davon bearbeiteten Bereich im Werkstück zur Kühlung gespritzt wird. Das Werkzeug wird mit seinem Schaft unmittelbar in der Axialbohrung der Futterhülse aufgenommen und mittels Klemmschrauben in der Futterhülse festgeklemmt, die auf eine Flachfläche des Werkzeugschaftes drücken. Aufgrund des Hochdrucks bei der Zuführung und Durchleitung der Kühlflüssigkeit wirkt sich die starke Durchmesserveränderung zwischen dem zentralen Kanal der Futterhülse und der kleineren Axialbohrung mit Nut bei dem Kühlflüssigkeitsstrom nicht nachteilig aus. Bei einer Mindermengenschmierung dagegen, bei der als Kühlflüssigkeit ein mit nur geringem Druck zugeführtes Aerosol verwendet wird, würde sich dies jedoch als sehr nachteilig erweisen.

Der Erfindung liegt die Aufgabe zugrunde,ein Futter der eingangs genannten Art zu schaffen, das insbesondere auch bei Mindermengenschmierung einen möglichst guten und störungsfreien Transport des Kühlund/oder Schmiermittels von der insbesondere zentralen Zuführung durch die Futterhülse bis hin möglichst nahe an die Werkzeugschneide ermöglicht und dabei einen nur geringen Aufwand bedingt.

Die Aufgabe ist bei einem Futter für drehantreibbare Werkzeuge der eingangs genannten Art gemäß der Erfindung durch die Merkmale im Anspruch 1 gelöst. Dadurch, daß die Nuten in der Hülse vorgesehen sind, ist das Werkzeug frei von besonderen Bohrungen, Nuten od.dgl. Kanälen für die Führung des Kühl- und/ oder Schmiermittels. Das Futter eignet sich somit fürjedes normale Werkzeug. Aufgrund der axialen Durchleitung des Kühl- und/oder Schmiermittels durch die Hülse und auf relativ großer axialer Länge ist gewährleistet, daß das Kühl- und/oder Schmiermittel möglichst nahe und in möglichst großer Menge störungsfrei ohne größere Umleitungen an die Schneiden des Werkzeuges gelangt. Die Erfindung schafft futterseitig die Voraussetzungen für eine Schmiermittelführung ohne größere Umlenkungen oder Umleitungen mit sonst dadurch bedingten Nachteilen. Somit ergeben sich sehr günstige Strömungsbedingungen für das Kühl-/Schmiermittel, wodurch das Futter gemäß der Erfindung insbesondere bei einer Mindermengenschmierung vorteilhaft ist.

Weitere besondere Erfindungsmerkmale und Ausgestaltungen dazu ergeben sich aus den Unteransprüchen.

Weitere Einzelheiten und Vorteile der Erfindung ergeben sich aus der nachfolgenden Beschreibung.

Der vollständige Wortlaut ist vorstehend und allein zur Vermeidung unnötiger Wiederholungen nicht wiedergegeben. sondem statt dessen lediglich durch Nennung der Anspruchsnummern darauf Bezug genommen, wodurch jedoch alle diese Anspruchsmerkmale als an dieser Stelle ausdrücklich und erfindungswesentlich offenbart zu gelten haben. Dabei sind alle in der vorstehenden und folgenden Beschreibung erwähnten Merkmale sowie auch die allein aus der Zeichnung entnehmbaren Merkmale weitere Bestandteile der Erfindung, auch wenn sie nicht besonders hervorgehoben und insbesondere nicht in den Ansprüchen erwähnt sind.

Die Erfindung ist nachfolgend anhand von in der Zeichnung gezeigten Ausführungsbeispielen näher erläutert. Es zeigen:
- Fig. 1: einen schematischen axialen Längsschnitt eines Futters für drehantreibbare Werkzeuge gemäß einem ersten Ausführungsbeispiel,
- Fig. 2 und 3: jeweils einen Schnitt entlang der Linie II-II bzw. III-III in Fig. 1,
- Fig. 4: einen schematischen axialen Längsschnitt eines Futters gemäß einem zweiten Ausführungsbeispiel.

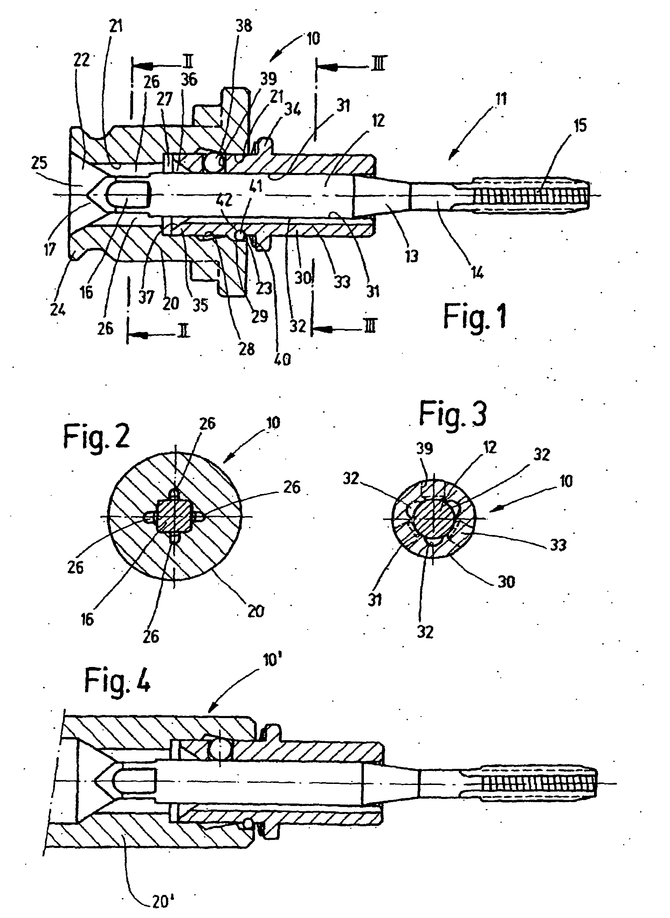

In Fig. 1 bis 3 ist ein Futter 10 für drehantreibbare Werkzeuge 11 gezeigt, insbesondere für Bohrer, vor allem für Gewindebohrer, von denen als Beispiel für ein Werkzeug 11 ein solcher in Fig. 1 bis 3 gezeigt ist. Dieses Werkzeug 11 weist einen Schaft 12, einen daran anschließenden, sich verjüngenden Abschnitt 13 mit angrenzendem Hals 14 und Gewindekopf 15 auf und ist am gegenüberliegenden Ende mit einem Zapfen 16 versehen, der im Querschnitt als Vieleck, insbesondere üblicherweise als Vierkant, für die Obertragung des Drehmomentes vom Futter 10 auf das Werkzeug 11 ausgebildet ist. Das Werkzeug 11 ist in dieser Form handelsüblich, wobei der endseitige Zapfen 16 an seinem freien Ende 17 in bekannter Weise kegelspitzförmig oder auch kugelförmig gestaltet ist.

Das Futter 10 ist beim ersten Ausführungsbeispiel als Einsatz gestaltet, der maschinenseitig in einem dort vorhandenen, nicht gezeigten Futter gespannt und gehalten werden kann. Das Futter 10 ist beim ersten Ausführungsbeispiel starr, kann aber bei einem anderen, nicht gezeigten Ausführungsbeispiel statt dessen auch in bekannter Weis mit einem axialen Längenausgleich versehen sein.

Im einzelnen weist das Futter 10 in Fig. 1 - 3 eine Futterhülse 20 auf, die eine zentrale innere Aufnahme 21 für eine darin lösbar einsetzbare Hülse 30 für das Werkzeug 11 und einen zentralen Hauptkanal 22 für.ein Kühl- und/oder Schmiermittel enthält. Die Hülse 30 enthält eine über ihre gesamte axiale Länge vom Schaft 12 des Werkzeugs 11 durchsetzte Axialbohrung 31 zur Aufnahme und Halterung des Schaftes 12. In der Hülse 30 sind auf der Innenseite ihrer Axialbohrung 31 Nuten 32 enthalten, die sich axial über die ganze Länge der Hülse 30 erstrecken und an beiden axialen Enden jeweils offen sind. Beim gezeigten Ausführungsbeispiel sind insgesamt drei Nuten 32 vorgesehen, die in etwa gleichen Umfangswinkelabständen aufeinanderfolgen. Die Nuten 32 stehen mit dem in Fig. 1 linken offenen Ende mit dem zentralen Hauptkanal 22 in der Futterhülse 20 in Verbindung und dienen der Führung des Kühl- und/oder Schmiermittels, das dem zentralen Hauptkanal 22 zugeführt wird und mittels der Nuten 32 in Längsrichtung des Werkzeuges 11 und außenseitig dieses möglichst nahe an den Gewindekopf 15 geführt wird.

Die Hülse 30 weist eine wesentliche Länge auf und ragt mit einem wesentlichen Längenabschnitt 33 axial aus der Aufnahme 21 der Futterhülse 20 heraus, wobei der Schaft 12 des Werkzeuges und damit ein wesentlicher Längenabschnitt des Werkzeuges 11 auf großer axialer Länge von der Hülse 30, insbesondere deren Längenabschnitt 33,außen umfaßt wird und dadurch über eine wesentliche axiale Länge durch die Nuten 32 Kühl- und/oder Schmiermittel möglichst nahe und möglichst verlustfrei an den Gewindekopf 15 herangeführt und geleitet wird. Dies ist vor allem dann von Vorteil, wenn eine Minderroengenschmierung mittels eines Luft-Öl-Gemisches vorgesehen ist. Durch die beschriebenen Maßnahmen wird möglichst viel Kühlund/oder Schmiermittel an die Schneiden des Werkzeuges 11, insbesondere an den Gewindekopf 15,gebracht und dadurch dort für eine möglichst gute Kühlung und Schmierung gesorgt. Das Kühl- und/oder Schmiermittel wird störungsfrei ohne die Gefahr einer etwaigen Verwirbelung von der Zuführung beim zentralen Hauptkanal 22 bis hin zum rechten offenen Ende der Nuten 32 durch das Futter 10 geleitet und wird dort im wesentlichen im laminaren Strom zum Gewindekopf 15 gerichtet und geführt. Wesentlichen Anteil daran hat der wesentliche, recht große Längenabschnitt 33 der Hülse 30, der einen wesentlichen Längenanteil des Werkzeugs 11, insbesondere im Bereich des Schaftes 12, axial übergreift.

Die Hülse 30 weist einen radial überstehenden Ringbund 34 auf, mit dem die Hülse 30 bei ihrer Axialverschiebung an einer beabstandeten Stirnseite 23 der Futterhülse 20 anschlagen kann. Der wesentliche Längenabschnitt 33 der Hülse 30 schließt sich axial an den Ringbund 34 an und übergreift das Werkzeug 11 auf einer wesentlichen Länge des insbesondere zylindrischen Schaftes 12.

Die Futterhülse 20 weist an dem Ende 24, das der Hülse 30 und der Stirnseite 23 abgewandt ist, eine im wesentlichen kegelstumpfförmige Zuströmöffnung 25 für das Kühl- und/oder Schmiermittel auf, die sich in Richtung zum Ende 17 kegelstumpfartig verjüngt und damit eine gezielte zentrale Leitung des zugeführten Kühl- und/oder Schmiermittels bewirkt.

Die Hülse 30 weist an ihrem Ende 35, das der Futterhülse 10 zugewandt ist, eine zentrale kegelstumpfförmige Einlauföffnung 36 für das Kühl- und/oder Schmiermittel auf, in die die Nuten 32 mit ihrem dortigen Ende münden. Die etwa kegelstumpfförmige Einlauföffnung 36 verjüngt sich in der gleichen Richtung wie die Zuströmöffnung 25, nämlich in Richtung zu den Nuten 32, das heißt in Fig. 1 nach rechts hin.

Der größere Durchmesser der etwa kegelstumpfförmigen Einlauföffnung 36 ist dabei größer bemessen als der Durchmesser des jeweiligen Nutgrundes der Nuten 32, derart, daß ein äußerer Ringflächenteil 37 geschaffen ist, der eine radial über die Nuten 32 hinaus überstehende, zu diesen hin gerichtete Leitfläche für das Kühl- und/oder Schmiermittel bildet.

Die Futterhülse 20 weist auf der Innenseite eines Abschnitts der zentralen inneren Aufnahme 21 sich axial erstreckende Nuten 26 für das Kühl- und/oder Schmiermittel auf. Die Nuten 26 münden mit ihrem in Fig. 1 linken Ende in die etwa kegelstumpfförmige Zuströmöffnung 25 aus, während sie mit ihrem rechten Ende zur Einlauföffnung 36 der Hülse 30 hin ausmünden. Beim gezeigten Ausführungsbeispiel enthält die Futterhülse 20 mehrere in Umfangsrichtung in etwa gleichen Winkelabständen aufeinanderfolgende Nuten 26, z.B. vier Nuten 26, was jedoch nicht zwingend ist. In Anpassung an den Querschnitt des Zapfens 16 des Werkzeuges 11 ist ein Abschnitt der inneren Aufnahme 21 der Futterhülse 20 in diesem Bereich im Querschnitt ebenfalls vieleckig, insbesondere viereckig, gestaltet. Die vier Nuten 26 befinden sich dabei jeweils im Bereich einer Seite des Vierecks (Fig. 2). Die Nuttiefe der Nuten 26 in der Futterhülse 20 ist etwa so groß bemessen wie die Nuttiefe der Nuten. 32 in der Hülse 30. Das Querschnittsmaß der inneren Aufnahme 21 der Futterhülse 20 im Bereich des Zapfens 16 entspricht etwa dem Durchmesser der Axialbohrung 31 der Hülse 30.

Wie Fig. 1 zeigt, ist dem Ende 35 der Hülse 30 und der dortigen etwa kegelstumpfförmigen Einlauföffnung 36 ein Ringraum 27 axial vorgelagert, in den die Nuten 26 in der Futterhülse 20 ausmünden.

Die Hülse 30 enthält zumindest einen Klemmkörper 38, z.B. in Form einer Kugel, in einem zugeordneten Wanddurchbruch 39, wobei der Klemmkörper 38 zum Lösen der Hülse 30 und des Werkzeuges 11 in eine Ringnut28 in der Aufnahme 21 der Futterhülse 20 radial ausweichen kann, die sich in einer Axialrichtung etwa kegelstumpfförmig verjüngt. Beim gezeigten Ausführungsbeispiel sind insgesamt drei in gleichen Umfangswinkelabstanden aufeinanderfolgende Wanddurchbrüche 39 mit Klemmkörpern 38 darin in der Hülse 30 vorgesehen (Fig. 3), wobei der jeweilige Wanddurchbruch 39 nicht im Bereich der Nut 32, sondem in Umfangsrichtung in Bereichen zwischen zwei aufeinanderfolgenden Nuten 32 vorgesehen ist, so daß dadurch keine Störung der Strömung im Bereich der Nuten 32 erfolgt.

Zwischen der Hülse 30 und der FutterhüTse 20 sind allgemein mit 40 bezeichnete Federmittel vorgesehen, die die Hülse 30 axial in einer Richtung, und zwar in Fig. 1 nach rechts hin, beaufschlagen. Die Federmittel 40 sind außerhalb der Futterhülse 20 angeordnet, und hierbei mit Vorteil zwischen dem' Ringbund 34 der Hülse 30 einerseits und der Stirnseite 23 der Futterhülse 20 andererseits. Als Federmittel 40 kann in einfacher Weise z.B. eine Wellfedervorgesehen sein.

In einer in Fig. 1 nach rechts hin offenen Axialnut 29 der Futterhülse 20 befindet sich eine Kugel 41, die in einer Eintiefung 42 der Hülse 30 aufgenommen ist und eine Verdrehsicherung der Hülse 30 relativ zur Futterhülse 20 bewirkt.

Bei dem in Fig. 1 gezeigten Zustand ist das Futter .mit dem darin eingesteckten und festgeklemmten Werkzeug 11 einsatzbereitzum Einsetzen in ein hier nicht weiter gezeigtes Maschinenfutter, in dem das Futter 10 gespannt wird. Bei diesem Maschinenfutter handelt es sich z.B. um ein bekanntes Futter, z.B. Gewindeschneidfutter, mit zentraler Zuführung des Kühl- und/ oder Schmiermittels. Dieses axial zugeführte Schmiermittel gelangt ohne Umleitung in die Zuströmöffnung 25 und von dieser ohne größere Umleitung und Strömungsverluste in die einzelnen Nuten 26 in der Futterhülse 20, wobei das kegelstumpfförmige Ende 17 des Zapfens 16 die störungsfreie Einleitung des Schmiermittels und Durchführung dieses begünstigt. Das Schmiermittel passiert die Nuten 26 und gelangt in den Ringraum 27 und wird dort wiederum gezielt in die Einlauföffnung 36 axial weitergeführt, von der es ebenfalls ohne größere Umlenkung axial in die einzelnen längsverlaufenden Nuten 32 der Hülse 30 gelangt und dabei die der jeweiligen Nut 32 zugewandte Außenfläche des Schaftes 12 des Werkzeuges 11 überstreicht, bis das Schmiermittel am in Fig. 1 rechten Ende der Hülse 30 und der Nuten 32 darin als gezielte, etwa achsparallele Strömung austritt und zu den Schneiden des Gewindekopfes 15 gerichtet und geführt wird. Beim Durchströmen der Futterhülse 20 und der Hülse 30 bewirkt das Kühl- und/oder Schmiermittel eine Kühlung der Teile des Werkzeuges 11, die sich auf diesem Längenbereich befinden, also des Zapfens 16 und des Schaftes 12. Das aus der Hülse 30 austretende Schmiermittel bewirkt eine Kühlung auch des Abschnittes 13 und Halses 14 sowie des anschließenden Gewindekopfes 15 des Werkzeuges 11 mit einhergehender Kühlung etwaiger diese umschließender Wandungsbereiche einer Bohrung in einem Werkstück. Vor allem bewirkt das zum Gewindekopf 15 geleitete Schmiermittel eine sehr gute kontinuierliche Schmierung im Bereich des Gewindekopfes 15.

Bei dem in Fig. 4 gezeigten zweiten Ausführungsbeispiel sind für die Teile, die dem ersten Ausführungsbeispiel entsprechen, gleiche Bezugszeichen verwendet, so daß dadurch auf die Beschreibung des ersten Ausführungsbeispieles zur Vermeidung von Wiederholungen Bezug genommen ist.

Das zweite Ausführungsbeispiel gemäß Fig. 4 unterscheidet sich vom ersten Ausführungsbeispiel in Fig. 1 bis 3 lediglich dadurch, daß die Futterhülse 20' hierbei Teil eines Gewindeschneidfutters ist, dessen restlicher Teil sich in Fig. 4 links daran anschließt und nicht weiter gezeigt ist, jedoch für sich bekannt ist. Ansonsten ist das Futter 10' in Fig. 4 in allen hier interessierenden Elementen identisch mit demjenigen in Fig. 1 bis 3.

## Patentansprüche

1. Futter für drehantreibbare Werkzeuge (11), insbesondere Bohrer, Gewindebohrer od. dgl., mit einer maschinenseitig aufnehmbaren Futterhülse (20; 20'), die eine zentrale innere Aufnahme (21) für eine darin lösbar einsetzbare Hülse (30) für das Werkzeug (11) und einen zentralen Hauptkanal (22) für ein Kühl- und/oder Schmiermittel enthält, das mittels Nuten (32) in Längsrichtung des Werkzeuges (11) und außenseitig dieses geleitet wird, wobei die Hülse (30) eine Axialbohrung (31) zur Aufnahme und Halterung des Schaftes (12) enthält und die Nuten (32) für das Kühl- und/oder Schmiermittel in der Hülse (30) auf der Innenseite ihrer Axialbohrung enthalten sind, sich axial über die ganze Länge der Hülse (30) erstrecken und an einem Ende mit dem zentralen Hauptkanal (22) in der Futterhülse (20; 20') in Verbindung stehen und am anderen Ende axial frei ausmünden, und die Axialbohrung (31) über ihre ganze Länge vom Schaft (12) des Werkzeugs (11) durchsetzbar ist
**dadurch gekennzeichnet,**
**dass** die Hülse (30) an dem Ende (35), das der Futterhülse (20; 20') zugewandt ist, eine zentrale, etwa kegelstumpfförmige Einlauföffnung (36) für das Kühl- und/oder Schmiermittel aufweist, in die die Nuten (32) mit ihrem Ende münden.

2. Futter nach Anspruch 1,
**dadurch gekennzeichnet,**
**daß** die Hülse (30) drei in im wesentlichen gleichen Umfangswinkelabständen aufeinanderfolgende Nuten (32) enthält.

3. Futter nach Anspruch 1 oder 2,
**dadurch gekennzeichnet,**
**daß** die Hülse (30) eine wesentliche Länge aufweist und mit einem Längenabschnitt (33) wesentlicher Länge aus der Aufnahme (21) der Futterhülse (20; 20') herausragt.

4. Futter nach einem der Ansprüche 1 bis 3,
**dadurch gekennzeichnet,**
**daß** die Hülse (30) einen, radial überstehenden Ringbund (34) aufweist, mit dem die Hülse (30) bei Axlalverschiebung, insbesondere zum Lösen aus der Futterhülse (20;20'), an einer beabstandeten Stirnseite (23) der Futterhülse (20,20') anschlagen kann.

5. Futter nach Anspruch 3 oder 4,
**dadurch gekennzeichnet,**
**daß** der Längenabschnitt (33) wesentlicher Länge der Hülse (30) sich axial an den Ringbund (34) anschließt und einen Schaftabschnitt eines eingesetzten Werkzeuges (11) auf wesentlicher. Länge übergreift und führt.

6. Futter nach einem der Ansprüche 1 bis 5,
**dadurch gekennzeichnet,**
**daß** die Futterhülse (20;20') an dem Ende (24), das der Hülse (30) abgewandt ist, eine zentrale, etwa kegelstumpfförmige Zuströmöffnung (25) für das Kühl- und/oder Schmiermittel aufweist.

7. Futter nach Anspruch 1,
**dadurch gekennzeichnet,**
**daß** der größere Durchmesser der etwa kegelstumpfförmigen Einlauföffnung (36) größer bemessen ist als der Durchmesser, auf dem der Nutgrund der Nuten (32) verläuft, derart,
**daß** ein äußerer Ringflächenteil (37) der etwa kegelstumpfförmigen. Einlauföffnung (36) eine radial über die Nuten (32) hinaus überstehende, zu diesen hin gerichtete Leitfläche bildet.

8. Futter nach einem der Ansprüche 1 bis 7,
**dadurch gekennzeichnet,**
**daß** die Futterhülse (20;20') auf der Innenseite eines Abschnitts der zentralen inneren Aufnahme (21) sich axial erstreckende Nuten (26) für das Kühl- und/oder Schmiermittel enthält, die an einem Ende In die etwa kegelstumpfförmige Zuströmöffnung (25) ausmünden und am anderen Ende zur Einlauföffnung (36) der Hülse (30) hin ausmünden.

9. Futter nach Anspruch 8,
**dadurch gekennzeichnet,**
**daß** die Nuttiefe der Nuten (26) in der Futterhülse (20;20') etwa so groß wie die Nuttiefe der Nuten (32) in der Hülse (30) bemessen ist.

10. Futter nach einem der Ansprüche 1 bis 9,
**dadurch gekennzeichnet;**
**daß** das Querschnittsmaß der inneren Aufnahme (21) der Futterhülse (20;20') zumindest auf einem Längentellbereich etwa dem Durchmesser der Axialbohrung (31) der Hülse (30) entspricht.

11. Futter nach einem der Ansprüche 1 bis 10,
**dadurch gekennzeichnet,**
**daß** die innere Aufnahme (21) der Futterhülse (20; 20')einen im Querschnitt vieleckigen, insbesondere viereckigen,Abschnitt aufweist, der zur Aufnahme eines Im Querschnitt entsprechend gestatteten Zapfens (16) des Werkzeuges (11) ausgebildet ist.

12. Futter nach einem der Ansprüche 8 bis 11,
**dadurch gekennzeichnet,**
**daß** die Futterhülse (20;20') vier In etwa gleichen Umfangswinkelabständen aufeinanderfolgende Nuten (26) enthält.

13. Futter nach einem der Ansprüche 8 bis 12,
**dadurch gekennzeichnet,**
**daß** die Nuten (26) der Futterhülse (20;20') Jeweils im Bereich einer Seite des Vielecks der Inneren Aufnahme (21) angeordnet sind.

14. Futter nach einem der Ansprüche 8 bis 13,
**dadurch gekennzeichnet,**
**daß** dem Ende (35) der Hülse (30) und der dortigen etwa kegelstumpfförmigen Einlauföffnung (36) ein Ringraum (27) axial vorgelagert ist, in den die Nuten (26) in der Futterhülse (20;20') ausmünden.

15. Futter nach einem der Ansprüche 1 bis 14,
**dadurch gekennzeichnet,**
**daß** die Hülse (30) mindestens einen Klemmkörper (38), z.B. mindestens eine Kugel, In einem zugeordneten Wanddurchbruch (39) enthält, der in eine in einer Axialrichtung sich etwa kegelstumpfförmig verjüngende Ringnut (28) In der Inneren Aufnahme (21) der Futterhülse (20;20') zum Lösen radial ausweichen kann.

16. Futter nach einem der Ansprüche 1 bis 15,
**gekennzeichnet durch**
die Hülse (30) relativ zur Futterhülse (20;20') axial in einer Richtung beaufschlagende Federmittel (40).

17. Futter nach Anspruch 16,
**dadurch gekennzeichnet,**
**daß** die Federmittel (40) außerhalb der Futterhülse (20;20') angeordnet sind.

18. Futter nach Anspruch 16 oder 17,
**dadurch gekennzeichnet,**
**daß** die Federmittel (40) zwischen dem Ringbund (34) der Hülse (30) und der davon beabstandeten Stirnseite (23) der Futterhülse (20;20') angeordnet sind und z.B. aus einer Wellfeder bestehen.

## Claims

1. Chuck for rotatable tools (11), in particular drills, taps or the like, comprising a chuck sleeve (20; 20') which can be received on the machine-side, comprising a central inner receiver (21) for a sleeve (30) for the tool (11) which can be detachably inserted in the receiver (21), and a central main duct (22) for a coolant and/or lubricant, which is guided by means of grooves (32) in the longitudinal direction of the tool (11) and outside thereof, the sleeve (30) including an axial hole (31) for receiving and holding the shaft (12), and the grooves (32) for the coolant and/or lubricant are contained in the sleeve (30) on the inside of its axial hole (31) and extend axially over the entire length of the sleeve (30) and are connected at one end to the central main duct (22) in the chuck sleeve (20; 20') and freely open out axially at the other end, and the axial hole (31) over its entire length is traversed by the shaft (12) of the tool (11), **characterised in that** the sleeve (30), at the end (35) facing the chuck sleeve (20, 20'), comprises a central, approximately truncated cone-shaped inlet aperture (36) for the coolant and/or lubricant into which the grooves (32) open at their end.

2. Chuck according to claim 1, **characterised in that** the sleeve (30) comprises three grooves (32) following one another at substantially identical peripheral angular distances.

3. Chuck according to claim 1 or 2, **characterised in that** the sleeve (30) has a substantial length and projects with a longitudinal portion (33) of substantial length from the receiver (21) of the chuck sleeve (20; 20').

4. Chuck according to any one of claims 1 to 3, **characterised in that** the sleeve (30) comprises a radially protruding annular collar (34), with which the sleeve (30) can strike against a spaced end face (23) of the chuck sleeve (20, 20') in the event of axial displacement, in particular for detachment from the chuck sleeve (20; 20').

5. Chuck according to claim 3 or 4, **characterised in that** the longitudinal portion (33) of substantial length of the sleeve (30) axially adjoins the annular collar (34) and reaches over and guides a shaft portion of an inserted tool (11) over a substantial length.

6. Chuck according to any one of claims 1 to 5, **characterised in that** the chuck sleeve (20; 20'), at the end (24) remote from the sleeve (30), comprises a central, approximately truncated cone-shaped feed aperture (25) for the coolant and/or lubricant.

7. Chuck according to claim 1, **characterised in that** the larger diameter of the approximately truncated cone-shaped inlet aperture (36) is larger than the diameter on which the groove base of the grooves (32) extends, in such a way that an outer annular face part (37) of the approximately truncated cone-shaped inlet aperture (36) forms a guide face radially protruding beyond the grooves (32) and directed toward them.

8. Chuck according to any one of claims 1 to 7, **characterised in that** the chuck sleeve (20; 20') on the inside of a portion of the central inner receiver (21) comprises axially extending grooves (26) for the coolant and/or lubricant, the grooves (26) opening out at one end into the approximately truncated cone-shaped feed aperture (25) and at the other end opening out toward the inlet aperture (36) of the sleeve (30).

9. Chuck according to claim 8, **characterised in that** the groove depth of the grooves (26) in the chuck sleeve (20; 20') is approximately the same size as the groove depths of the grooves (32) in the sleeve (30).

10. Chuck according to any one of claims 1 to 9, **characterised in that** the cross-sectional measurement of the inner receiver (21) of the chuck sleeve (20; 20') at least on one longitudinal section corresponds approximately to the diameter of the axial hole (31) of the sleeve (30).

11. Chuck according to any one of claims 1 to 10, **characterised in that** the inner receiver (21) of the chuck sleeve (20; 20') comprises a polygonal, in particular rectangular, portion in cross-section which is designed to receive a shaft (16) of the tool formed accordingly in cross-section.

12. Chuck according to any one of claims 8 to 11, **characterised in that** the chuck sleeve (20; 20') comprises four grooves (26) following one another at approximately equal peripheral angular distances.

13. Chuck according to any one of claims 8 to 12, **characterised in that** the grooves (26) of the chuck sleeve (20; 20') are each arranged in the region of one side of the polygon of the inner receiver (21).

14. Chuck according to any one of claims 8 to 13, **characterised in that** an annular space (27) is axially arranged upstream from the end (35) of the sleeve (30) and the approximately truncated cone-shaped inlet aperture (36) there, into which space (27) the grooves (26) in the chuck sleeve (20; 20') open out.

15. Chuck according to any one of claims 1 to 14, **characterised in that** the sleeve (30) comprises at least one clamping body (38), for example at least one sphere, in an associated wall opening (39) which can radially move away for detachment into an annular groove (28) tapering in an approximately truncated cone-shape in an axial direction in the inner receiver (21) of the chuck sleeve (20; 20').

16. Chuck according to any one of claims 1 to 15, **characterised by** resilient means (40) loading the sleeve axially in one direction relative to the chuck sleeve (20; 20').

17. Chuck according to claim 16, **characterised in that** the resilient means (40) are arranged outside the chuck sleeve (20; 20').

18. Chuck according to claim 16 or 17, **characterised in that** the resilient means (40) are arranged between the annular collar (34) of the sleeve (30) and the end face (23) of the chuck sleeve (20; 20') spaced therefrom and consist, for example, of an ondular washer.

## Revendications

1. Mandrin pour outils (11) pouvant être entraînés en rotation, en particulier forets, tarauds ou similaires, présentant une douille de mandrin (20 ; 20') pouvant être logée du côté machine, qui contient un logement intérieur (21) central pour une douille (30) amovible pouvant y être insérée pour l'outil (11) et un canal principal (22) central pour un fluide de refroidissement et/ou lubrifiant, qui est amené au moyen de rainures (32) dans la direction longitudinale de l'outil (11) et à l'extérieur de celui-ci, la douille (30) contenant un trou axial (31) pour recevoir et maintenir la queue (12), et les rainures (32) pour le fluide de refroidissement et/ou lubrifiant sont contenues dans la douille (30) sur le côté intérieur de son trou axial (31) et s'étendent axialement sur toute la longueur de la douille (30) et sont en liaison avec le canal principal (22) central dans la douille de mandrin (20 ; 20') à une extrémité et débouchent librement axialement à l'autre extrémité, le trou axial (31) est sur toute son longueur traversé par la queue (12) de l'outid (11),
**caractérisé en ce**
**que** la douille (30), à l'extrémité (35) qui est orientée vers la douille de mandrin (20 ; 20'), présente un orifice d'alimentation (36) central sensiblement tronconique, pour le fluide de refroidissement et/ou lubrifiant, dans lequel les rainures (32) débouchent par leur extrémité.

2. Mandrin selon la revendication 1,
**caractérisé en ce**
**que** la douille (30) contient trois rainures (32) se suivant à des distances angulaires substantiellement égales.

3. Mandrin selon la revendication 1 ou 2,
**caractérisé en ce**
**que** la douille (30) présente une longueur substantielle et fait saillie, sur une section longitudinale (33) de longueur substantielle, hors du logement (21) de la douille de mandrin (20 ; 20').

4. Mandrin selon l'une des revendications 1 à 3,
**caractérisé en ce**
**que** la douille (30) présente une collerette annulaire (34) saillante radialement, par laquelle la douille (30) en cas de translation axiale, en particulier pour le desserrage hors de la douille de mandrin (20 ; 20'), peut buter sur une face frontale (23) écartée de la douille de mandrin (20, 20').

5. Mandrin selon la revendication 3 ou 4,
**caractérisé en ce**
**que** la section longue (33) de longueur substantielle de la douille (30) fait suite axialement à la collerette annulaire (34) et dépasse et guide sur une longueur substantielle une section de queue d'un outil (11) mis en place,.

6. Mandrin selon l'une des revendications 1 à 5,
**caractérisé en ce**
**que** la douille de mandrin (20 ; 20'), à l'extrémité (24) qui est tournée à l'opposé de la douille (30), présente un orifice d'alimentation (25) central sensiblement tronconique, pour le fluide de refroidissement et/ou lubrifiant.

7. Mandrin selon la revendication 1,
**caractérisé en ce**
**que** le plus grand diamètre de l'orifice d'alimentation (36) sensiblement tronconique est dimensionné plus grand que le diamètre sur lequel s'étend le fond des rainures (32), de manière telle qu'une partie de surface annulaire extérieure (37) de l'orifice d'alimentation (36) sensiblement tronconique forme une surface de guidage dépassant les rainures (32), orientée vers celles-ci.

8. Mandrin selon l'une des revendications 1 à 7,
**caractérisé en ce**
**que** la douille de mandrin (20 ; 20') sur la face intérieure d'une section du logement intérieur (21) central contient pour le fluide de refroidissement et/ou lubrifiant des rainures (26) s'étendant axialement, qui à une extrémité débouchent dans l'orifice d'alimentation (25) sensiblement tronconique et à l'autre extrémité débouchent vers l'orifice d'alimentation (36) de la douille (30).

9. Mandrin selon la revendication 8,
**caractérisé en ce**
**que** la profondeur de rainure des rainures (26) dans la douille de mandrin (20 ; 20') est dimensionnée sensiblement aussi grande que la profondeur de rainure des rainures (32) dans la douille (30).

10. Mandrin selon l'une des revendications 1 à 9,
**caractérisé en ce**
**que** la dimension de section transversale du logement intérieur (21) de la douille de mandrin (20 ; 20') du moins sur une zone partielle longitudinale correspond sensiblement au diamètre du trou axial (31) de la douille (30).

11. Mandrin selon l'une des revendications 1 à 10,
**caractérisé en ce**
**que** le logement intérieur (21) de la douille de mandrin (20 ; 20') présente une section de section transversale polygonale, en particulier carrée, qui est conformée pour recevoir un téton (16) de l'outil (11) configuré de manière correspondante en section transversale.

12. Mandrin selon l'une des revendications 8 à 11,
**caractérisé en ce**
**que** la douille de mandrin (20 ; 20') contient quatre rainures (26) se suivant à des distances angulaires sensiblement égales.

13. Mandrin selon l'une des revendications 8 à 12,
**caractérisé en ce**
**que** les rainures (26) de la douille de mandrin (20 ; 20') sont disposées chacune dans la zone d'un côté du polygone du logement intérieur (21).

14. Mandrin selon l'une des revendications 8 à 13,
**caractérisé en ce**
**que**, axialement en amont de l'extrémité (35) de la douille (30) et de l'orifice d'alimentation (36) sensiblement tronconique est placé un espace annulaire (27), dans lequel les rainures (26) débouchent dans la douille de mandrin (20 ; 20').

15. Mandrin selon l'une des revendications 1 à 14,
**caractérisé en ce**
**que** la douille (30) contient au moyen un corps de blocage (38), par exemple au moins une bille, dans un passage de paroi (39) correspondant, qui peut se déporter radialement dans une rainure annulaire (28) se rétrécissant sensiblement en forme de tronc de cône, dans une direction axiale dans le logement intérieur (21) de la douille de mandrin (20 ; 20') pour le desserrage.

16. Mandrin selon l'une des revendications 1 à 15,
**caractérisé par**
des moyens de ressort (40) agissent sur la douille (30) axialement dans un sens par rapport à la douille de mandrin (20 ; 20').

17. Mandrin selon la revendication 16,
**caractérisé en ce**
**que** les moyens de ressort (40) sont disposés à l'extérieur de la douille de mandrin (20 ; 20').

18. Mandrin selon la revendication 16 ou 17,
**caractérisé en ce**
**que** les moyens de ressort (40) sont disposés entre la collerette annulaire (34) de la douille (30) et la face frontale (23), écartée de celle-ci, de la douille de mandrin (20 ; 20') et sont constitués par exemple par une rondelle ondulée.
